# EUROPEAN PATENT APPLICATION

(11) **EP 4 507 265 A1**
(43) Date of publication of application: **12.02.2025**
(21) Application number: 23869899.7
(22) Date of filing: 10.07.2023
(51) Int. Cl.: H04L 43/087, H04W 72/04

(54) **DATA TRANSMISSION METHOD AND APPARATUS, COMPUTER READABLE MEDIUM, AND ELECTRONIC DEVICE**

(30) Priority: 30.09.2022 CN 202211206091
(71) Applicant: Tencent Technology (Shenzhen) Company Limited, Shenzhen, Guangdong 518057 (CN)
(72) Inventor: LEI, Yixue, Shenzhen, Guangdong 518057 (CN)
(74) Representative: AWA Sweden AB
(86) International application number: PCT/CN2023/106509
(87) International publication number: WO 2024/066652

(57) **Abstract**

Embodiments of the present application provide a data transmission method and apparatus, a computer readable medium, and an electronic device. The data transmission method comprises: acquiring a delay jitter distribution feature of a service data packet, the delay jitter distribution feature being used for representing a transmission delay range of the service data packet; receiving delay jitter requirements of the service data packet configured by a core network element; and configuring a scheduling transmission policy of an access network element according to the delay jitter distribution feature and the delay jitter requirements.

## Description

### RELATED APPLICATION

This application claims priority to Chinese Patent Application No. 202211206091.5, filed with the China National Intellectual Property Administration on September 30, 2022 and entitled "DATA TRANSMISSION METHOD AND APPARATUS, COMPUTER-READABLE MEDIUM, AND ELECTRONIC DEVICE", which is incorporated herein by reference in its entirety.

### FIELD OF THE TECHNOLOGY

This application relates to the field of computers and communication technologies, and in particular, to a data transmission method and apparatus, a computer-readable medium, and an electronic device.

### BACKGROUND OF THE DISCLOSURE

In a 5^{th}-generation (5G) system (5GS) and an evolved 5GS, high bandwidth interactive services such as cloud gaming, virtual reality (VR), augmented reality (AR), mixed reality (MR), extended reality (XR), and cinematic reality (CR) are of significance.

Transmission of data packets of the interactive services may be based on periodicities, and by virtue of which time-frequency resource efficiency of wireless networks may be improved through a semi-persistent scheduling (SPS) mechanism or a connected-discontinuous reception (C-DRX) mechanism.

### SUMMARY

An embodiment of the present disclosure provides a data transmission method, performed by a first access network element, including: obtaining a first latency variation distribution characteristic of a service data packet indicating a transmission latency range of the service data packet; receiving latency variation requirements of the service data packet determined by a core network element; and configuring a scheduling and transmission policy of a second access network element based on the first latency variation distribution characteristic and the latency variation requirements.

An embodiment of the present disclosure provides a data transmission method, performed by a core network element, including: obtaining a latency variation distribution characteristic of a service data packet indicating a transmission latency range of the service data packet; receiving latency variation requirements of the service data packet transmitted by an AF entity; adjusting the latency variation distribution characteristic based on the latency variation requirements, to obtain an adjusted latency variation distribution characteristic; and transmitting the adjusted latency variation distribution characteristic to an access network element, wherein the access network element configures a scheduling and transmission policy based on the adjusted latency variation distribution characteristic.

An embodiment of the present disclosure provides a data transmission method, performed by a first access network element, including: receiving an adjusted latency variation distribution characteristic for a service data packet transmitted by a core network element, the adjusted latency variation distribution characteristic being obtained by the core network element by adjusting a latency variation distribution characteristic of the service data packet based on latency variation requirements of the service data packet, and the latency variation distribution characteristic being configured for indicating a transmission latency range of the service data packet; and configuring a scheduling and transmission policy of a second access network element based on the adjusted latency variation distribution characteristic.

An embodiment of the present disclosure provides a data transmission apparatus, including: an obtaining unit, configured to obtain a first latency variation distribution characteristic of a service data packet indicating a transmission latency range of the service data packet; a receiving unit, configured to receive latency variation requirements of the service data packet determined by a core network element; and a configuration unit, configured to configure a scheduling and transmission policy of a second access network element based on the first latency variation distribution characteristic and the latency variation requirements.

An embodiment of the present disclosure provides a data transmission apparatus, including: an obtaining unit, configured to obtain a latency variation distribution characteristic of a service data packet indicating a transmission latency range of the service data packet; a receiving unit, configured to receive latency variation requirements of the service data packet transmitted by an AF entity; an adjustment unit, configured to adjust the latency variation distribution characteristic based on the latency variation requirements, to obtain an adjusted latency variation distribution characteristic; and a transmission unit, configured to transmit the adjusted latency variation distribution characteristic to an access network element, wherein the access network element configures a scheduling and transmission policy based on the adjusted latency variation distribution characteristic.

An embodiment of the present disclosure provides a data transmission apparatus, including: a receiving unit, configured to receive an adjusted latency variation distribution characteristic for a service data packet transmitted by a core network element, the adjusted latency variation distribution characteristic being obtained by the core network element by adjusting a latency variation distribution characteristic of the service data packet based on latency variation requirements of the service data packet, and the latency variation distribution characteristic being configured for indicating a transmission latency range of the service data packet; and a configuration unit, configured to configure a scheduling and transmission policy of a second access network element based on the adjusted latency variation distribution characteristic.

An embodiment of the present disclosure provides a computer-readable medium, having a computer program stored therein, the computer program, when executed by a processor, implementing the data transmission method in the above embodiments.

An embodiment of the present disclosure provides an electronic device, including: one or more processors; and a memory, configured to store one or more computer programs, the one or more computer programs, when executed by the one or more processors, causing the electronic device to implement the data transmission method in the above embodiments.

An embodiment of the present disclosure provides a computer program product, including a computer program, the computer program being stored in a computer-readable storage medium, and a processor of an electronic device reading the computer program from the computer-readable storage medium and executing the computer program to cause the electronic device to perform the data transmission method provided in the above embodiments.

### BRIEF DESCRIPTION OF THE DRAWINGS

FIG. 1 is a schematic diagram of an exemplary system architecture to which technical solutions of embodiments of the present disclosure are applicable.
FIG. 2 is a schematic diagram of a transmission process of a multimedia data packet according to some embodiments of the present disclosure.
FIG. 3 is a schematic diagram of a system architecture of a data transmission method according to some embodiments of the present disclosure.
FIG. 4 is a schematic diagram of a comparison between latency variation distributions during transmission of a service data packet according to some embodiments of the present disclosure.
FIG. 5 is a schematic diagram of a system architecture of a data transmission method according to some embodiments of the present disclosure.
FIG. 6 is a flowchart of a data transmission method according to some embodiments of the present disclosure.
FIG. 7 is a flowchart of a data transmission method according to some embodiments of the present disclosure.
FIG. 8 is a flowchart of a data transmission method according to some embodiments of the present disclosure.
FIG. 9 is a flowchart of a data transmission method according to some embodiments of the present disclosure.
FIG. 10 is an interaction flowchart of a data transmission method according to some embodiments of the present disclosure.
FIG. 11 is a flowchart of a data transmission method according to some embodiments of the present disclosure.
FIG. 12 is an interaction flowchart of a data transmission method according to some embodiments of the present disclosure.
FIG. 13 is a block diagram of a data transmission apparatus according to an embodiment of the present disclosure.
FIG. 14 is a block diagram of a data transmission apparatus according to some embodiments of the present disclosure.
FIG. 15 is a block diagram of a data transmission apparatus according to some embodiments of the present disclosure.
FIG. 16 is a schematic structural diagram of a computer system of an electronic device configured to implement an embodiment of the present disclosure.

### DESCRIPTION OF EMBODIMENTS

Exemplary implementations are described more comprehensively with reference to drawings. However, the exemplary implementations may be implemented in various forms and are not to be understood as being limited to the examples. Rather, these implementations are provided to make the present disclosure more comprehensive and complete, and comprehensively convey the concept of the exemplary implementations to a person skilled in the art.

In addition, features, structures, or characteristics described in the present disclosure may be combined in one or more embodiments in any proper manner. In the following descriptions, many specific details are provided to comprehensively understand the embodiments of the present disclosure. However, a person skilled in the art is to be aware that, during implementation of the technical solutions in the present disclosure, not all detailed features in the embodiments need to be used, one or more specific details may be omitted, or another method, unit, apparatus, operation, or the like may be used.

Block diagrams shown in the drawings are merely functional entities, and do not necessarily correspond to physically independent entities. In other words, the functional entities may be implemented in a form of software, or in one or more hardware modules or integrated circuits, or in different networks and/or processor apparatuses and/or microcontroller apparatuses.

Flowcharts shown in the drawings are exemplary descriptions, and neither necessarily need to include all content and operations, nor necessarily need to be performed in a described order. For example, some operations may be further divided, while some operations may be combined or partially combined. Therefore, an actual execution order may be changed according to an actual case.

"A plurality of" in the description means two or more. "And/or" describes an association relationship between associated objects, and indicates that three relationships may exist. For example, A and/or B may represent that only A exists, both A and B exist, and only B exists. The character "/" may indicates an "or" relationship between the associated objects.

As the 5^{th}-Generation (5G) mobile communication technology develops, many multimedia services that require a large data amount and a short latency are widely used. For example, interactive service such as cloud gaming services, virtual reality (VR), augmented reality (AR), mixed reality (MR), extended reality (XR), and cinematic reality (CR) are widely used.

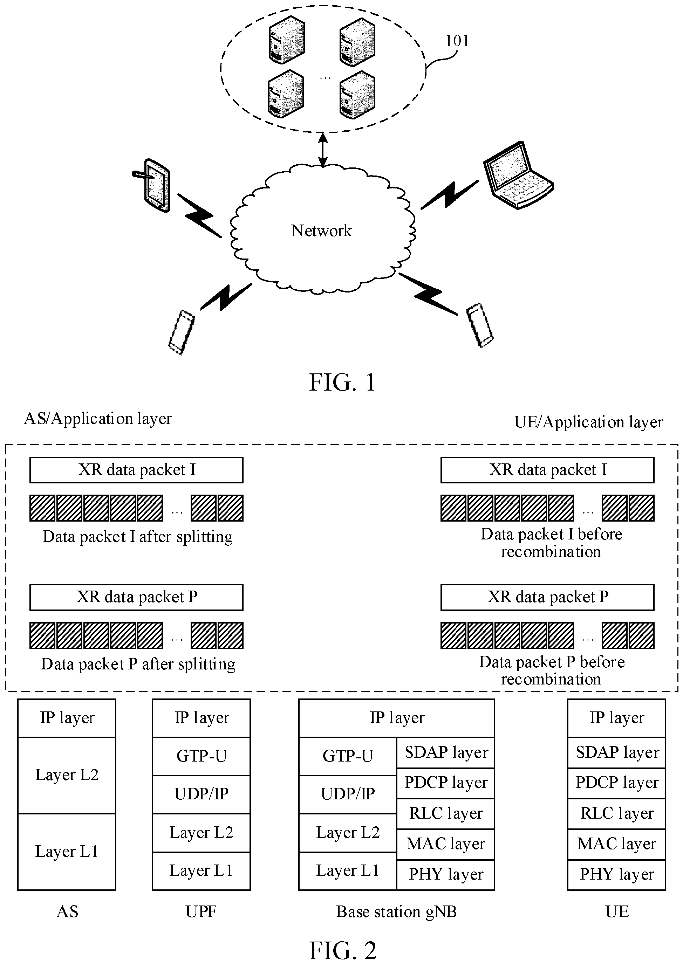

For example, in a cloud gaming scenario shown in FIG. 1, a cloud server 101 is configured to run a cloud game. The cloud server 101 may render a game picture, encode an audio signal and a rendered image, and transmit encoded data to game clients through a network. The game client may be a user equipment (UE) with a basic streaming media playback capability, a human-computer interaction capability, a communication capability, and the like, such as a smartphone, a tablet computer, a notebook computer, a desktop computer, a smart television, smart home, an on-board terminal, or an aircraft. The game client may be an application running in a terminal device. For example, the game client may decode the encoded data transmitted by the cloud server 101 to obtain an analog audio/video signal, and play the analog audio/video signal.

FIG. 1 shows an exemplary system architecture representing a cloud gaming system, and does not limit an architecture of the cloud gaming system. For example, in some embodiments, the cloud gaming system may further include a backend server configured for scheduling and the like. In addition, the cloud server 101 may be an independent physical server, or may be a server cluster formed by a plurality of physical servers or a distributed system, or may be a cloud server providing cloud computing services such as a cloud service, a cloud database, cloud computing, a cloud function, cloud storage, a network service, cloud communication, a middleware service, a domain name service, a security service, a content delivery network (CDN), a big data platform, and an artificial intelligence (AI) platform. The game client and the cloud server 101 may be directly or indirectly connected through wired or wireless communication, but the disclosure is not limited thereto.

In the multimedia-based interaction service application scenarios, a multimedia data packet may be split into a plurality of data packets for transmission due to a large size. As shown in FIG. 2, in a 5G system (5GS), a user plane mainly includes an application server (AS), a user plane function (UPF), a base station (a next generation nodeB, gNB for short), and a UE. Multimedia data packets may be transmitted in a downlink direction in some typical service scenarios. For example, the multimedia data packets may be transmitted from the AS to the UPF, and then to the UE through the gNB. During transmission, a multimedia data packet (an XR data packet is used as an example in FIG. 2) is split at an application layer of the AS, and based on split packets arriving at the UPF from the AS as Internet protocol (IP) packets, the 5GS transmits data sub-packets to a UE side through a protocol data unit (PDU) session, and the data sub-packets are gradually transmitted from a protocol stack to upper layers at the UE side and recombined to recover the multimedia data packet.

In a system shown in FIG. 2, a layer L1 may be a physical layer, configured for original data to be transmitted on various physical media. A layer L2 may be a data link layer, which is configured to provide services to a network layer based on services provided by the physical layer. An IP layer may be a network layer, which is configured to achieve data transmission between two end systems. UDP is a user datagram protocol in Chinese. GTP-U is a general packet radio service (GPRS) tunneling protocol user plane in Chinese. PHY is an abbreviation of physical, which refers to a physical layer in Chinese. MAC is media access control in Chinese. RLC is radio link control in Chinese. PDCP is a packet data convergence protocol in Chinese. SDAP is a service data adaptation protocol in Chinese.

As described above, for a multimedia service, such as an XR and media (XRM) service, a frame of multimedia data packet may be split into a plurality of data packets for transmission. A data packet formed by a single multimedia service frame or a group of packets (GoP) may have a relatively large number of bytes, which may be carried by a series of IP data packets. A correlation exists between the IP data packets. Processing the packets based on the correlation may save wireless network bandwidth. Some XRM service flows have a periodicity, and may be, for example, 60 frames per second (FPS), 90 FPS, or 120 FPS data packets, and the video frames generate data packets at a time interval of approximately 16.67 ms, 11.11 ms, or 8.33 ms. Through the periodic characteristic, time-frequency resource efficiency of a wireless network can be improved. For example, a semi-persistent scheduling (SPS) mechanism or a connected-discontinuous reception (C-DRX) mechanism may be adopted based on the periodicity of an XRM service, provided that the 5GS has learned that the XRM service flow has the periodicity.

In some embodiment, an application function (AF)/AS may directly provide periodicity information and a latency variation distribution characteristic of a service flow to the 5GS. Based on a resolution of an XR service being increased, a video frame may be split into a plurality of IP data packets for transmission, and periodicities and latency variation distribution characteristics of the split IP data packets may be affected based on the IP data packets being transmitted between a third-party AS and a 5GS gateway. Based on the data packets arriving at a base station for scheduling and transmission over a wireless network, the periodicities and the latency variation distribution characteristics may be changed, and may result in a deviation in C-DRX configuration on the base station side.

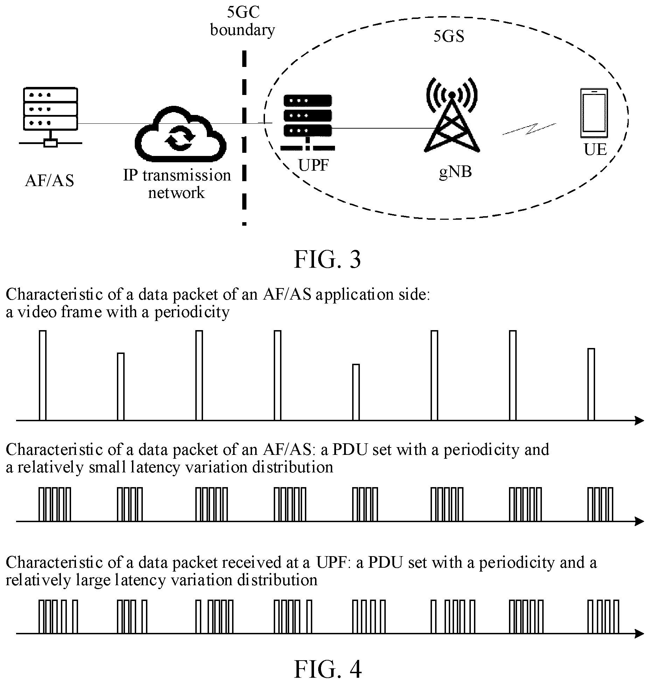

Specifically, as shown in FIG. 3, the AF/AS can implement a control plane function of a third-party AS, and perform interaction in a manner of AF-network exposure function (NEF)-policy control function (PCF) or AF-PCF. The AF/AS entity can further implement a user plane function of the third-party AS, for example, in a manner of AS-IP transmission network-UPF interface. FIG. 3 shows a boundary of the 5GS, for example, a deployment location of the 5GS gateway. The 5GS gateway may be a UPF entity, a control plane entity responsible for capability opening such as an NEF or a PCF, or a router/switch node or the like deployed between the 5GS and an external network.

In the embodiments of the present disclosure, the IP transmission network may be implemented in a wired or wireless manner. For example, the IP transmission network may be a metropolitan area network, an access network, or a wide area network based on an optical network, which depends on a topology relationship between a 5G core (5GC) boundary and the third-party AS. Because a 5G network may adopt a network architecture that facilitates sinking of the UPF, if the AF/AS is located at an edge, the UPF sinks to the edge, which can reduce a topological distance between the 5GC boundary (i.e., the UPF at the edge position) and the AF/AS. However, the AF/AS may alternatively be located in a central cloud. In this case, sinking of the UPF cannot resolve the problem. Therefore, impact of the IP transmission network between the third-party AS and the 5GC boundary, i.e., the UPF, on service flow transmission may be considered.

Specifically, as shown in FIG. 4, a characteristic of a data packet of an AF/AS application side, for example, may be a video frame with a periodicity. During transmission, the data packet is split into a plurality of IP data packets. The plurality of IP data packets may form a PDU set. A latency variation distribution of the IP data packets may be relatively small. Because the IP data packets need to be transmitted between the third-party AS and the 5GS gateway, the latency variation distribution of the IP data packets increases based on the IP data packets arriving at the UPF. As shown in FIG. 4, an increase in a latency between IP data packets in a PDU set results in an increase in a time for receiving the PDU set.

Therefore, in some embodiment of the present disclosure, the AF/AS may combine periodicity information and a latency variation distribution characteristic of a service data packet with a characteristic of the IP transmission network between the AF/AS and the UPF, to achieve adjustment of the periodicity information and the latency variation distribution characteristic of the service data packet (or adjustment of only the latency variation distribution characteristic of the service data packet), and then provide indication information that may be configured for indicating adjusted periodicity information and an adjusted latency variation distribution characteristic of the service data packet to the 5GS, so that a 5GS network element such as the UPF can process an XR data packet based on the adjusted periodicity information and the adjusted latency variation distribution characteristic, including but not limited to C-DRX configuration and SPS scheduling for a radio access network (RAN). The latency variation distribution characteristic is a distribution range of data packets obtained through calculation.

In the embodiments of the present disclosure, C-DRX is a discontinuous reception mode in a connected state, in which case a UE periodically may enter a sleep state without detecting a physical downlink control channel (PDCCH), and the UE may be woken up from the sleep state based on detection being requested, thereby achieving power saving.

In addition, the UPF can actively detect the characteristic of the IP transmission network between the AF/AS and the UPF, analyze impact of the characteristic of the transmission network on the periodicity information and the latency variation distribution characteristic. Based on receiving the periodicity information and the latency variation distribution characteristic provided by the AF/AS, the UPF may achieve adjustment of the periodicity information and the latency variation distribution characteristic of the service data packet (or adjustment of the latency variation distribution characteristic of the service data packet) in combination with the characteristic of the IP transmission network between the AF/AS and the UPF, and process the XR data packet based on the adjusted periodicity information and the adjusted latency variation distribution characteristic.

In some embodiments, during the adjustment of the periodicity information and the latency variation distribution characteristic of the service data packet, a rule of the impact of the characteristic of the IP transmission network between the AF/AS and the UPF on the periodicity and the latency variation distribution characteristic of the service data packet may be determined by using an AI method, thereby achieving the adjustment of the periodicity information and the latency variation distribution characteristic of the service data packet.

For example, during the adjustment of the periodicity information and the latency variation distribution characteristic of the service data packet, a range corresponding to an initial latency variation distribution characteristic of [-4 ms, 4 ms] may be modified to [-5 ms, +5 ms] by the 5GC network element such as the PCF. A specific algorithm may be determined by collecting statistics on forwarding information of a data packet, such as arrival and leaving, but the disclosure is not limited thereto.

Regardless of whether the AF/AS directly provides the periodicity information and the latency variation distribution characteristic of the service flow to the 5GS, or transmits the periodicity information and the latency variation distribution characteristic of the service flow to the 5GS based on adjusting the periodicity information and the latency variation distribution characteristic of the service flow, or an internal network element of the 5GS adjusts the periodicity information and the latency variation distribution characteristic of the service flow, a limitation may exist. Based on the service data packet arriving at the base station for scheduling and transmission over a wireless network, the base station may not ensure that a transmission latency of the service data packet can satisfy latency variation requirements based on performing SPS configuration or C-DRX configuration based on the periodicity and the latency variation distribution characteristic of the service data packet, and case service experience may be deteriorated.

In some embodiments of the present disclosure, the AF/AS may notify the 5GC of the latency variation requirements (for example, jitter requirements), the 5GC further configures the jitter requirements to the gNB, and the gNB performs C-DRX configuration or C-DRX configuration by using the periodicity of the service data packet and the latency variation distribution characteristic of the service data packet under the jitter requirements, so that the transmission of the data packet satisfies the jitter requirements, C-DRX-based power saving operations or SPS-based time-frequency resource saving can be achieved, and quality of service (QoS) degradation can be avoided, thereby facilitating improvement of service experience.

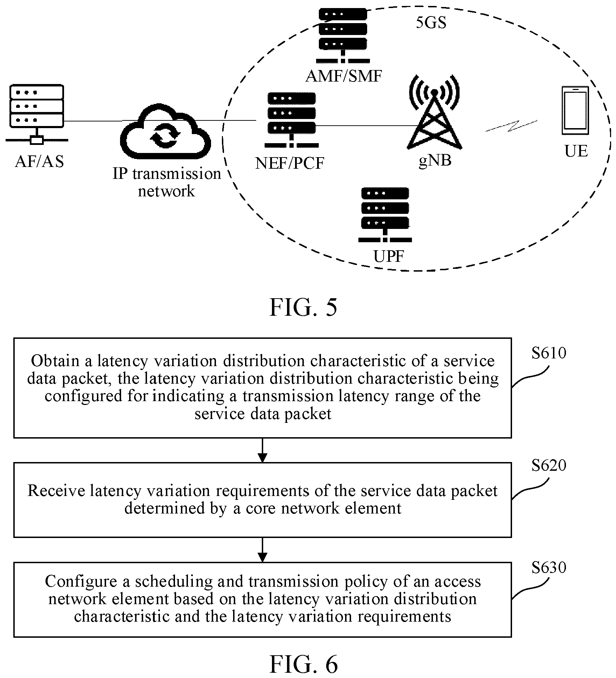

As shown in FIG. 5, similar to the system architecture shown in FIG. 3, the AF/AS can achieve the control plane function of the third-party AS, and can perform interaction in a manner of AF-NEF-PCF or AF-PCF. The AF/AS entity may further implement the user plane function of the third-party AS, for example, in the manner of AS-IP transmission network-UPF interface. As a third-party application provider, the AF can provide a QoS requirement, including a jitter requirement. Moreover, the AF can interact with the NEF or the PCF through a control plane interface, and transmit the jitter requirement to the 5GC.

A 5GC network element such as the UPF may collect statistics on traffic characteristics of a data packet, such as a periodicity and a latency variation distribution characteristic (for example, a jitter range), through interaction with the AS or detection, and then provide the information to the base station. The base station may configure a scheduling and transmission policy of an access network element based on the latency variation distribution characteristic and the latency variation requirements, which may achieve configuration of the scheduling and transmission policy of the access network element based on the latency variation distribution characteristic while satisfying the latency variation requirements, thereby improving time-frequency resource efficiency and avoiding QoS degradation.

Implementation details of the technical solutions of the embodiments of the present disclosure are described below in detail.

FIG. 6 is a flowchart of a data transmission method according to an embodiment of the present disclosure. The data transmission method may be performed by an access network element, for example, may be performed by a base station (a gNB). Referring to FIG. 6, the data transmission method may include S610 to S630, which are described as follows:

Operation S610: Obtain a latency variation distribution characteristic of a service data packet, the latency variation distribution characteristic being configured for indicating a transmission latency range of the service data packet.

In some embodiments, the service data packet may be a periodic service data packet. Periodicity information of the periodic service data packet may be provided by an AF, for example, may be transmitted by the AF to the access network element through a core network. The periodicity information may be determined based on at least one of the following factors: an encoding/decoding manner of the service data packet, a multimedia service flow transmission parameter corresponding to the service data packet, a push parameter of an AS for a multimedia service flow, and a pull parameter of the AS for the multimedia service flow.

In some embodiments, the encoding/decoding manner of the service data packet may be, for example, one of advanced video coding (AVC), high efficiency video coding (HEVC), versatile video coding (VVC), and the like. During specific implementation, the periodicity information of the service data packet may be determined based on the encoding/decoding manner of the service data packet.

In some embodiments, the multimedia service flow transmission parameter corresponding to the service data packet may include service data content included in the service data packet, for example, one or more of audio, a video, haptic information, and the like. During specific implementation, the periodicity information of the service data packet may be determined based on the service data content (for example, periodic audio information) included in the service data packet.

In some embodiments, the push parameter of the AS for the multimedia service flow may be a push frame rate (such as a fixed frame rate or a variable frame rate). The pull parameter of the AS for the multimedia service flow may be a pull frame rate (which may be a fixed frame rate or a variable frame rate).

In some embodiments of the present disclosure, the obtaining a latency variation distribution characteristic of a service data packet may be receiving a latency variation distribution characteristic transmitted by a core network element. The latency variation distribution characteristic is forwarded by the core network element based on a latency variation distribution characteristic transmitted by an AF entity. The latency variation distribution characteristic is transmitted by the core network element to the access network element based on adjusting the latency variation distribution characteristic transmitted by the AF entity.

For example, based on determining the latency variation distribution characteristic of the service data packet, the AF may provide the latency variation distribution characteristic to a PCF (the AF may directly transmit the latency variation distribution characteristic to the PCF, or may transmit the latency variation distribution characteristic to an NEF and then the NEF forwards the latency variation distribution characteristic to the PCF), and then the PCF may configure the latency variation distribution characteristic to the base station through a session management function (SMF) and/or an access and mobility management function (AMF).

In some embodiments, based on determining the latency variation distribution characteristic of the service data packet, the AF may adjust the latency variation distribution characteristic of the service data packet based on a characteristic of an IP transmission network between the AF/AS and a core network gateway (such as a UPF), and may provide adjusted latency variation distribution characteristic to the PCF. Then the PCF may configure the adjusted latency variation distribution characteristic to the base station. In some embodiments, impact of a network transmission characteristic between the AS and the core network gateway on the latency variation distribution characteristic of the service data packet may be taken into consideration, so that the adjusted latency variation distribution characteristic can adapt to an actual transmission process of the service data packet, which avoids a deviation in a configured data transmission control policy as a result of impact of the network transmission characteristic, and improves accuracy of scheduling the transmission of the service data packet and quality of transmitting the service data packet.

In some embodiments, the UPF may actively detect the characteristic of the IP transmission network between the AF/AS and the UPF, and analyze impact of the characteristic of the IP transmission network on the latency variation distribution characteristic of the service data packet. Therefore, based on receiving the latency variation distribution characteristic provided by the AF/AS, the UPF may achieve adjustment of the latency variation distribution characteristic of the service data packet in combination with the characteristic of the IP transmission network between the AF/AS and the UPF, and may configure the adjusted latency variation distribution characteristic to the base station. Based on adjusting the latency variation distribution characteristic, the UPF may configure the adjusted latency variation distribution characteristic to the base station through the core network element. For example, the UPF may configure the adjusted latency variation distribution characteristic to the base station through the SMF. The PCF may subscribe to a network analytics service from a network data analytics function (NWDAF). The service is configured to collect the latency variation distribution characteristic adjusted by the UPF. Then the PCF may obtain the adjusted latency variation distribution characteristic from the NWDAF, and then configure the adjusted latency variation distribution characteristic to the base station through the SMF and/or the AMF.

In some embodiments, the latency variation distribution characteristic includes a maximum latency variation value and a minimum latency variation value. For example, the latency variation distribution characteristic may be a latency variation distribution range composed of the maximum latency variation value and the minimum latency variation value, or may be a plurality of discrete latency variation values including the maximum latency variation value and the minimum latency variation value.

In some embodiments, the AF may obtain a network transmission status of the service data packet obtained by the AS through statistics collection based on determining the latency variation distribution characteristic of the service data packet, and may determine the maximum latency variation value and the minimum latency variation value based on the network transmission status of the service data packet. In some embodiments, the network transmission status of the service data packet obtained by the AS through statistics collection may be obtained from a network interface between the AS and a transmission network.

Operation S620: Receive latency variation requirements of the service data packet determined by the core network element.

In some embodiments, the receiving latency variation requirements of the service data packet configured by the core network element may be receiving latency variation requirements from the AF entity forwarded by a PCF entity. The latency variation requirements are generated by the AF entity based on service attribute information corresponding to the service data packet, which can represent variations of a latency during data packet transmission inside the 5GS.

Based on determining the latency variation requirements of the service data packet, the AF may provide the latency variation requirements to the PCF (the AF may directly transmit the latency variation requirements to the PCF, or may transmit the latency variation requirements to the NEF and then the NEF forwards the latency variation requirements to the PCF), and then the PCF may configure the latency variation requirements to the base station through the SMF and/or the AMF.

In some embodiments, the AF may determine the latency variation requirements of the service data packet based on at least one of the following factors: a tolerance of the service data packet for a latency variation, a size of a playback buffer corresponding to the service data packet, a playable duration of the playback buffer corresponding to the service data packet, a service characteristic corresponding to the service data packet, transmitting end capability information of the service data packet, receiving end capability information of the service data packet, and an encoding/decoding algorithm corresponding to the service data packet.

In some embodiments, a smaller tolerance of the service data packet for the latency variation indicates higher latency variation requirements of the service data packet (for example, a smaller required maximum variation frequency or a smaller required maximum variation amplitude). On the contrary, a larger tolerance of the service data packet for the latency variation indicates lower latency variation requirements of the service data packet. For example, cloud gaming data with a high time relevancy requirement has a relatively small tolerance for the latency variation.

In some embodiments, a larger playback buffer corresponding to the service data packet indicates smaller jitter alleviation difficulty. On the contrary, a smaller playback buffer corresponding to the service data packet indicates larger jitter alleviation difficulty. The size of the playback buffer may inversely correlated with the latency variation requirements. A larger playback buffer indicates lower latency variation requirements, and a smaller playback buffer may indicate higher latency variation requirements.

In some embodiments, the size of the playback buffer may be related to a playable duration corresponding to the cached service data packet. A larger playback buffer indicates a larger playable duration, and a smaller playback buffer indicates a smaller playable duration. Therefore, the playable duration of the playback buffer is inversely correlated with the latency variation requirements. To be specific, a larger playable duration of the playback buffer indicates lower latency variation requirements, and a smaller playable duration of the playback buffer indicates higher latency variation requirements.

In some embodiments, the service characteristic corresponding to the service data packet can determine the latency variation requirements of the service data packet. For example, if the service characteristic corresponding to the service data packet is a strongly interactive service or a real-time interactive service, it indicates that the latency variation requirements of the service data packet are relatively high. If the service characteristic corresponding to the service data packet is a service that has no excessively high requirement on time relevancy (for example, a data backup service), it indicates that the latency variation requirements of the service data packet are relatively low.

In some embodiments, the transmitting end capability information and the receiving end capability information of the service data packet may be capabilities of the transmitting end and the receiving end in dealing with the latency variation. Specifically, for example, if the transmitting end has a capability of performing transmission in parallel, and the receiving end can receive data from a plurality of channels and process the data, the transmitting end may transmit the same service data packet in parallel through a plurality of channels (for example, 3 channels), so that the receiving end may perform de-duplication and fusion on the service data packet received through the plurality of channels. In this case, the receiving end and the transmitting end have relatively strong capabilities of dealing with the latency variation, and the corresponding latency variation requirements are relatively low. On the contrary, if the receiving end and the transmitting end have relatively poor capabilities of dealing with the latency variation, the corresponding latency variation requirements are relatively high.

In some embodiments, the encoding/decoding algorithm corresponding to the service data packet can determine whether dropping a/some data packets affects recovery of the data packet. If dropping a/some data packets does not affect recovery of the entire data packet, no large impact is caused even if a latency variation occurs during transmission of the/these data packets, which indicates that the latency variation requirements are relatively low. On the contrary, if dropping a/some data packets affects recovery of the data packet, the latency variation requirements are relatively high during transmission of the/these data packets.

Operation S630: Configure a scheduling and transmission policy of an access network element based on the latency variation distribution characteristic and the latency variation requirements.

In some embodiments, a process of configuring the scheduling and transmission policy of the access network element based on the latency variation distribution characteristic and the latency variation requirements may include adjusting the latency variation distribution characteristic based on the latency variation requirements to obtain an adjusted latency variation distribution characteristic and then configuring the scheduling and transmission policy of the access network element based on the adjusted latency variation distribution characteristic. In some embodiments, the scheduling and transmission policy of the access network element may be, for example, performing C-DRX configuration or SPS scheduling.

Based on the technical solution of the embodiment shown in FIG. 6, in some embodiment, based on configuring the scheduling and transmission policy of the access network element, the base station may further detect whether service data transmitted between the AS and the access network element satisfies the latency variation requirements during transmission, and may reconfigure the scheduling and transmission policy of the access network element based on the latency variation distribution characteristic and the latency variation requirements if the service data transmitted between the AS and the access network element does not satisfy the latency variation requirements during the transmission, and may perform data transmission based on the reconfigured scheduling and transmission policy.

The detecting whether service data transmitted between the AS and the access network element satisfies the latency variation requirements during transmission may be detecting whether service data transmitted between the AS and a UE satisfies the latency variation requirements during transmission.

In some embodiments, the process of reconfiguring the scheduling and transmission policy of the access network element based on the latency variation distribution characteristic and the latency variation requirements may be repeated a plurality of times, until the service data transmitted between the AS and the access network element satisfies the latency variation requirements during the transmission based on the scheduling and transmission policy of the access network element being reconfigured.

In the technical solution of the embodiment shown in FIG. 6, the scheduling and transmission policy of the access network element is configured based on the latency variation distribution characteristic and the latency variation requirements, so that the scheduling and transmission policy of the access network element may be configured based on the latency variation distribution characteristic while the latency variation requirements is satisfied, which may avoid QoS degradation while improving time-frequency resource efficiency, and may facilitate improvement of a service experience.

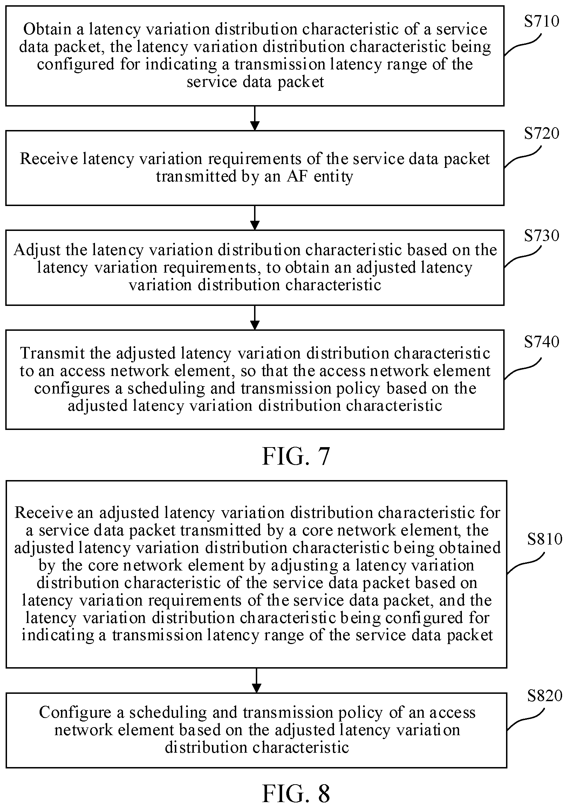

FIG. 7 is a flowchart of a data transmission method according to some embodiments of the present disclosure. The data transmission method may be performed by a core network element. The core network element may be a PCF. Referring to FIG. 7, the data transmission method may include S710 to S740, which are described in detail as follows:

Operation S710: Obtain a latency variation distribution characteristic of a service data packet, the latency variation distribution characteristic being configured for indicating a transmission latency range of the service data packet.

In some embodiments, the core network element may obtain the latency variation distribution characteristic of the service data packet from an AF. For example, based on determining the latency variation distribution characteristic of the service data packet, the AF may provide the latency variation distribution characteristic to the PCF (the AF may directly transmit the latency variation distribution characteristic to the PCF, or may transmit the latency variation distribution characteristic to an NEF and then the NEF forwards the latency variation distribution characteristic to the PCF).

In some embodiments, based on determining the latency variation distribution characteristic of the service data packet, the AF may adjust the latency variation distribution characteristic of the service data packet based on a characteristic of an IP transmission network between the AF/AS and a core network gateway (such as a UPF), and may provide adjusted latency variation distribution characteristic to the PCF.

In some embodiments, the UPF may actively detect the characteristic of the IP transmission network between the AF/AS and the UPF, and analyze impact of the characteristic of the IP transmission network on the latency variation distribution characteristic of the service data packet. Based on receiving the latency variation distribution characteristic provided by the AF/AS, the UPF may achieve adjustment of the latency variation distribution characteristic of the service data packet in combination with the characteristic of the IP transmission network between the AF/AS and the UPF. The PCF may subscribe to a network analytics service from an NWDAF. The service is configured to collect the latency variation distribution characteristic adjusted by the UPF. Then the PCF may obtain the adjusted latency variation distribution characteristic from the NWDAF.

In some embodiments, the UPF may detect the characteristic of the IP transmission network between the AF/AS and the UPF, and may analyze impact of the characteristic of the transmission network on the latency variation distribution characteristic of the service data packet. The PCF may subscribe to a network analytics service from the NWDAF. The service is configured to collect a relevant parameter configured for adjusting the latency variation distribution characteristic from the UPF. Then the PCF may obtain the relevant parameter configured for adjusting the latency variation distribution characteristic from the NWDAF, to achieve the adjustment of the latency variation distribution characteristic of the service data packet.

In some embodiments, the PCF may subscribe to a network analytics service from the NWDAF. The service is configured to collect a relevant parameter configured for adjusting the latency variation distribution characteristic from the UPF and analyze how to adjust the latency variation distribution characteristic of the service data packet based on the characteristic of the network transmission. Then the PCF may obtain the relevant parameter configured for adjusting the latency variation distribution characteristic from the NWDAF, to achieve the adjustment of the latency variation distribution characteristic of the service data packet.

Operation S720: Receive latency variation requirements of the service data packet transmitted by an AF entity.

In some embodiments, based on determining the latency variation requirements of the service data packet, the AF may provide the latency variation requirements to the PCF (the AF may directly transmit the latency variation requirements to the PCF, or may transmit the latency variation requirements to the NEF and then the NEF forwards the latency variation requirements to the PCF).

Operation S730: Adjust the latency variation distribution characteristic based on the latency variation requirements, to obtain an adjusted latency variation distribution characteristic.

Operation S740: Transmit the adjusted latency variation distribution characteristic to an access network element, so that the access network element configures a scheduling and transmission policy based on the adjusted latency variation distribution characteristic.

In some embodiments, a process in which the core network element transmits the adjusted latency variation distribution characteristic to the access network element, for example, may include that the PCF transmits the adjusted latency variation distribution characteristic to the access network element through an SMF and an AMF, and then the access network element configures the scheduling and transmission policy based on the adjusted latency variation distribution characteristic, for example, performs C-DRX configuration or SPS scheduling.

In some embodiments, because the latency variation distribution characteristic is adjusted by the core network element based on the latency variation requirements, based on the adjusted latency variation distribution characteristic being transmitted to the access network element and the access network element configuring the scheduling and transmission policy based on the adjusted latency variation distribution characteristic, a problem that service data transmitted between the AS and the access network element (for example, a UE) does not satisfy the latency variation requirements during transmission may occur. The access network element may trigger the core network element to readjust the latency variation distribution characteristic of the service data packet based on the latency variation requirements.

If receiving triggering information configured for instructing to readjust the latency variation distribution characteristic transmitted by the access network element, the core network element readjusts the latency variation distribution characteristic of the service data packet based on the latency variation requirements of the service data packet, and transmits a readjusted latency variation distribution characteristic to the access network element, so that the access network element reconfigures the scheduling and transmission policy based on the readjusted latency variation distribution characteristic.

In some embodiments, the process of reconfiguring the scheduling and transmission policy of the access network element based on the latency variation distribution characteristic and the latency variation requirements may be repeated a plurality of times, until the service data transmitted between the AS and the access network element satisfies the latency variation requirements during the transmission based on the scheduling and transmission policy of the access network element is reconfigured.

In some embodiments, the core network element may obtain periodicity information of the service data packet, and may transmit the periodicity information of the service data packet to the access network element, so that the access network element configures the scheduling and transmission policy based on the periodicity information and the adjusted latency variation distribution characteristic. For example, based on determining the periodicity information of the service data packet, the AF may provide the periodicity information to the PCF (the AF may directly transmit the periodicity information to the PCF, or may transmit the periodicity information to the NEF and then the NEF forwards the periodicity information to the PCF), and then the PCF may configure the periodicity information to the access network element through the SMF and/or the AMF.

According to some embodiments, as shown in FIG. 7, the core network element may adjust the latency variation distribution characteristic based on the latency variation requirements, and then transmit the adjusted latency variation distribution characteristic to the access network element, so that the access network element configures the scheduling and transmission policy, which may achieve configuration of the scheduling and transmission policy of the access network element based on the latency variation distribution characteristic may satisfy the latency variation requirements, may avoid QoS degradation and may improve time-frequency resource efficiency.

FIG. 8 is a flowchart of a data transmission method according to some embodiments of the present disclosure. The data transmission method may be performed by an access network element, for example, may be performed by a base station (a gNB). Referring to FIG. 8, the data transmission method may include S810 to S820, which are described as follows:

Operation S810: Receive an adjusted latency variation distribution characteristic for a service data packet transmitted by a core network element, the adjusted latency variation distribution characteristic being obtained by the core network element by adjusting a latency variation distribution characteristic of the service data packet based on latency variation requirements of the service data packet, and the latency variation distribution characteristic being configured for indicating a transmission latency range of the service data packet.

In some embodiments, for a process of adjusting the latency variation distribution characteristic of service data packet by the core network element based on the latency variation requirements of the service data packet, reference may be made to the technical solutions in the above embodiments. Details are not described.

Operation S820: Configure a scheduling and transmission policy of an access network element based on the adjusted latency variation distribution characteristic.

In some embodiments, that the access network element configures the scheduling and transmission policy of the access network element may be performing C-DRX configuration, SPS scheduling, or the like.

In some embodiments, based on configuring the scheduling and transmission policy of the access network element, the access network element may further detect whether service data transmitted between an AS and the access network element (for example, a UE) satisfies the latency variation requirements during transmission, and trigger the core network element to readjust the latency variation distribution characteristic of the service data packet based on the latency variation requirements of the service data packet if the service data transmitted between the AS and the access network element does not satisfy the latency variation requirements during the transmission. For example, the access network element transmits triggering information configured for instructing to readjust the latency variation distribution characteristic to the core network element. After receiving the triggering information, the core network element may readjust the latency variation distribution characteristic of the service data packet based on the latency variation requirements of the service data packet, and transmit a readjusted latency variation distribution characteristic to the access network element. After receiving the readjusted latency variation distribution characteristic transmitted by the core network element, the access network element reconfigures the scheduling and transmission policy of the access network element based on the readjusted latency variation distribution characteristic.

In some embodiments, the process of reconfiguring the scheduling and transmission policy of the access network element based on the latency variation distribution characteristic and the latency variation requirements may be repeated a plurality of times, until the service data transmitted between the AS and the access network element satisfies the latency variation requirements during the transmission based on the scheduling and transmission policy of the access network element being reconfigured.

According to some embodiments, as shown in FIG. 8, the access network element may configure the scheduling and transmission policy based on the latency variation distribution characteristic adjusted by the core network element, which may achieve configuration of the scheduling and transmission policy of the access network element based on the latency variation distribution characteristic may satisfy the latency variation requirements, may avoid QoS degradation, may improve time-frequency resource efficiency.

Some embodiments of the present disclosure are described above in terms of the access network element and the core network element. Some embodiments of the present disclosure are further described in terms of interaction among a plurality of device entities.

Some embodiments involve on coordination between jitter requirements and a scheduling and transmission policy of an access network element (for example, a base station (a gNB)), for example, C-DRX configuration and SPS configuration, to prevent the C-DRX configuration from affecting implementation of the jitter requirements.

In the embodiments of the present disclosure, a service data packet may be an XR service data packet, or may be another multimedia service data packet, for example, a data packet of a cloud gaming service, or a data packet of a service such as VR, AR, MR, or CR. Some embodiments may be applicable to processing of an XR service data packet, or may be applicable to the processing of a data packet of a service such as a cloud gaming service, VR, AR, MR, or CR.

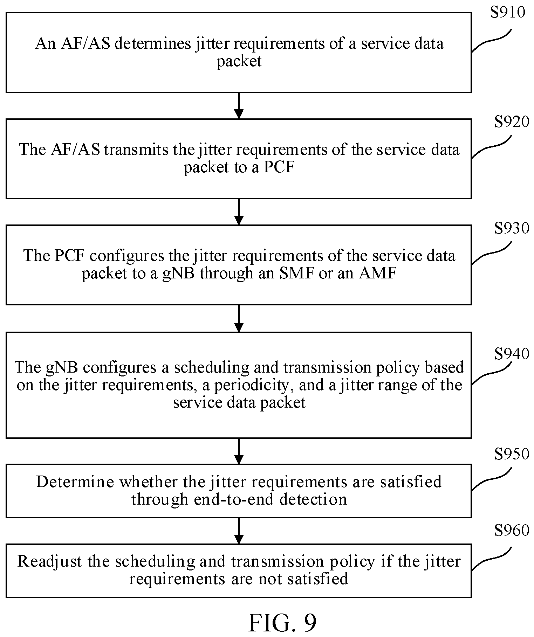

As shown in FIG. 9, a data transmission method according to some embodiments of the present disclosure includes the following operations:

Operation S910: An AF/AS determines jitter requirements of a service data packet.

In some embodiments, the AF may determine the latency variation requirements of the service data packet based on at least one of the following factors: a tolerance of the service data packet for a latency variation, a size of a playback buffer corresponding to the service data packet, a playable duration of the playback buffer corresponding to the service data packet, a service characteristic corresponding to the service data packet, transmitting end capability information of the service data packet, receiving end capability information of the service data packet, and an encoding/decoding algorithm corresponding to the service data packet. For details, reference may be made to the technical solutions in the above embodiments. The details are not described.

Operation S920: The AF/AS transmits the jitter requirements of the service data packet to a PCF.

In some embodiments, based on determining the latency variation requirements of the service data packet, the AF may directly transmit the latency variation requirements to the PCF, or may transmit the latency variation requirements to an NEF and then the NEF may forward the latency variation requirements to the PCF.

Operation S930: The PCF configures the jitter requirements of the service data packet to a gNB through an SMF or an AMF.

Operation S940: The gNB configures a scheduling and transmission policy based on the jitter requirements, a periodicity, and a jitter range of the service data packet.

In some embodiments, a process in which the gNB configures the scheduling and transmission policy of an access network element based on the jitter range, the periodicity, and the jitter requirements may include adjusting the latency variation distribution characteristic based on the latency variation requirements to obtain an adjusted latency variation distribution characteristic and configuring the scheduling and transmission policy of the access network element based on the adjusted latency variation distribution characteristic. In some embodiments, the scheduling and transmission policy of the access network element may be, for example, performing C-DRX configuration or SPS scheduling.

Operation S950: Determine whether the jitter requirements are satisfied through end-to-end detection.

In some embodiments, for example, it may be detected whether service data transmitted between the AS and the access network element (for example, a UE) satisfies the latency variation requirements during transmission.

Operation S960: Readjust the scheduling and transmission policy if the jitter requirements are not satisfied.

In some embodiments, a process of readjusting the scheduling and transmission policy may be reconfiguring the scheduling and transmission policy based on the latency variation distribution characteristic and the latency variation requirements, and the reconfiguration process may be repeated a plurality of times, until the service data transmitted between the AS and the access network element satisfies the latency variation requirements during the transmission based on the scheduling and transmission policy of the access network element being reconfigured.

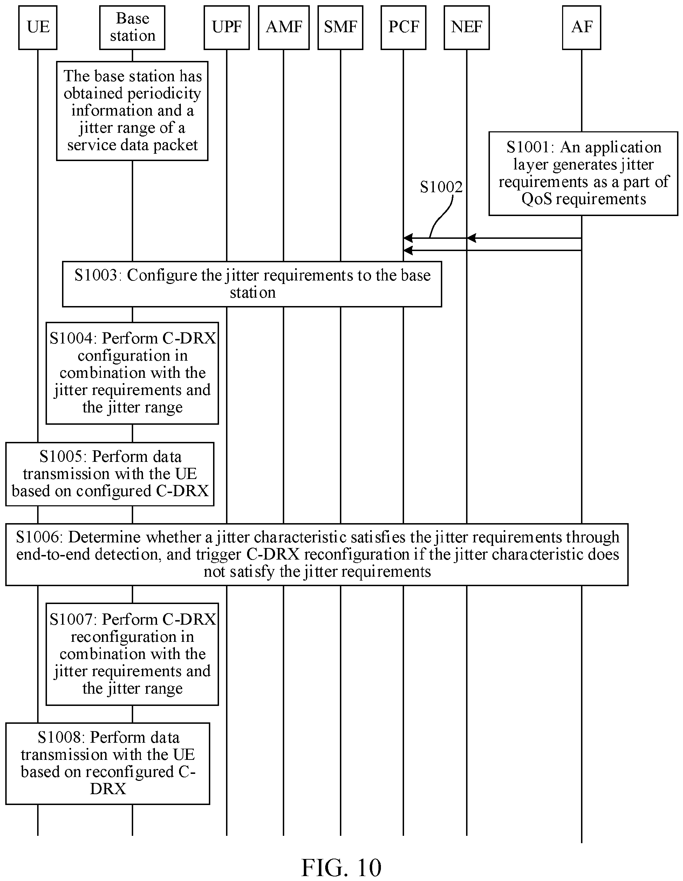

The interaction process of FIG. 9 is shown in FIG. 10, and includes the following operations:

S1001: An application layer generates jitter requirements as a part of QoS requirements.

S1002: The AF transmits the jitter requirements of a service data packet to the PCF. Specifically, the AF may directly transmit the jitter requirements to the PCF, or may transmit the jitter requirements to the NEF and then the NEF transmits the jitter requirements to the PCF.

S1003: The PCF configures the jitter requirements to the base station. For example, the PCF configures the jitter requirements of the service data packet to the gNB through the SMF or the AMF.

S1004: The base station performs C-DRX configuration in combination with the jitter requirements and the jitter range.

In some embodiments, the base station may adjust the latency variation distribution characteristic based on the latency variation requirements to obtain an adjusted latency variation distribution characteristic, and then configure the scheduling and transmission policy of the access network element based on the adjusted latency variation distribution characteristic. In some embodiments, the scheduling and transmission policy of the access network element may be, for example, performing C-DRX configuration or SPS scheduling.

S1005: The base station performs data transmission with a UE based on configured C-DRX.

S1006: Determine whether a jitter characteristic satisfies the jitter requirements through end-to-end detection, and trigger C-DRX reconfiguration if the jitter characteristic does not satisfy the jitter requirements.

In some embodiments, the determining whether a jitter characteristic satisfies the jitter requirements through end-to-end detection may be detecting whether a jitter characteristic between the application layer (for example, the AS) and the UE satisfies the jitter requirements.

S1007: Perform C-DRX reconfiguration in combination with the jitter requirements and the jitter range if it is detected that the jitter characteristic does not satisfy the jitter requirements.

S1008: The base station performs data transmission with the UE based on reconfigured C-DRX.

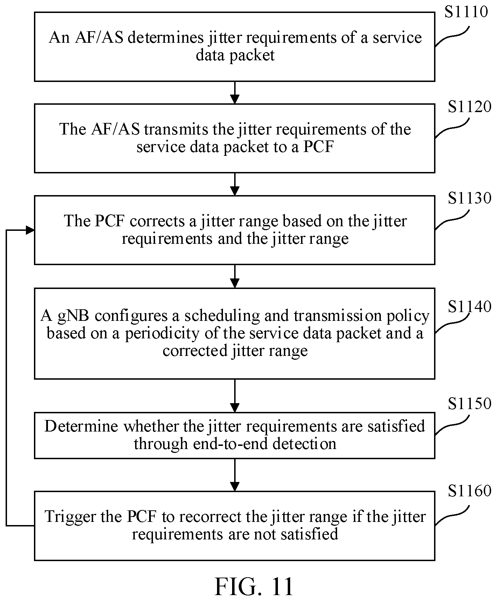

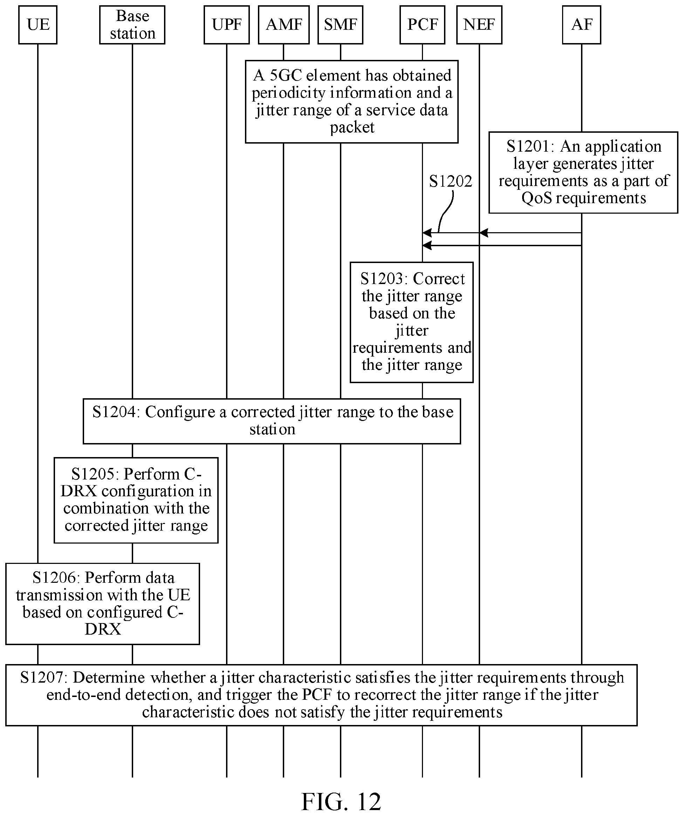

The technical solution of the embodiments shown in FIG. 9 and FIG. 10 is a process in which the access network element, i.e., the gNB, configures the scheduling and transmission policy based on the jitter requirements and the jitter range, for which it is assumed that the gNB obtains the periodicity and the jitter range of the service data packet in advance. A process in which a network side configures a scheduling and transmission policy based on jitter requirements and a jitter range is described below with reference to FIG. 11 and FIG. 12. In embodiments of FIG. 11 and FIG. 12, it is assumed that a core network element obtains a periodicity and the jitter range of a service data packet in advance.

As shown in FIG. 11, a data transmission method according to some embodiments of the present disclosure includes the following operations:

Operation S1110: An AF/AS determines jitter requirements of a service data packet.

In some embodiments, the AF may determine the latency variation requirements of the service data packet based on at least one of the following factors: a tolerance of the service data packet for a latency variation, a size of a playback buffer corresponding to the service data packet, a playable duration of the playback buffer corresponding to the service data packet, a service characteristic corresponding to the service data packet, transmitting end capability information of the service data packet, receiving end capability information of the service data packet, and an encoding/decoding algorithm corresponding to the service data packet. For details, reference may be made to the technical solutions in the above embodiments. The details are not described.

Operation S1120: The AF/AS transmits the jitter requirements of the service data packet to a PCF.

In some embodiments, based on determining the latency variation requirements of the service data packet, the AF may directly transmit the latency variation requirements to the PCF, or may transmit the latency variation requirements to an NEF and then the NEF may forward the latency variation requirements to the PCF.

Operation S1130: The PCF corrects a jitter range based on the jitter requirements and the jitter range. Based on correcting the jitter range, the PCF may configure a corrected jitter range to a gNB through an SMF and/or an AMF.

Operation S1140: A gNB configures a scheduling and transmission policy based on a periodicity of the service data packet and the jitter range corrected by the PCF.

In some embodiments, the scheduling and transmission policy of the access network element may be, for example, performing C-DRX configuration or SPS scheduling.

Operation S1150: Determine whether the jitter requirements are satisfied through end-to-end detection.

In some embodiments, for example, it may be detected whether service data transmitted between the AS and the access network element (for example, a UE) satisfies the latency variation requirements during transmission.

Operation S1160: Trigger the PCF to recorrect the jitter range based on the jitter requirements and the jitter range.

In some embodiments, the process of recorrecting the jitter range may be repeated a plurality of times, until the service data transmitted between the AS and the access network element satisfies the latency variation requirements during the transmission based on the scheduling and transmission policy of the access network element being reconfigured.

The interaction process of FIG. 11 is shown in FIG. 12, and includes the following operations:
S1201: An application layer generates jitter requirements as a part of QoS requirements.
S1202: The AF transmits the jitter requirements of a service data packet to the PCF. Specifically, the AF may directly transmit the jitter requirements to the PCF, or may transmit the jitter requirements to the NEF and then the NEF transmits the jitter requirements to the PCF.
S1203: The PCF corrects the jitter range based on the jitter requirements and the jitter range.
S1204: The PCF configures a corrected jitter range to the base station.
S1205: The base station performs C-DRX configuration in combination with the corrected jitter range.

In some embodiments, the scheduling and transmission policy of the access network element may be, for example, performing C-DRX configuration or SPS scheduling.

S1206: The base station performs data transmission with a UE based on configured C-DRX.

S1207: Determine whether a jitter characteristic satisfies the jitter requirements through end-to-end detection, and trigger the PCF to recorrect the jitter range based on the jitter requirements and the jitter range if the jitter characteristic does not satisfy the jitter requirements.

In some embodiments, the determining whether a jitter characteristic satisfies the jitter requirements through end-to-end detection may be detecting whether a jitter characteristic between the application layer (for example, the AS) and the UE satisfies the jitter requirements.

In some embodiments, the process of recorrecting the jitter range may be repeated a plurality of times, until the service data transmitted between the AS and the access network element satisfies the latency variation requirements during the transmission based on the scheduling and transmission policy of the access network element being reconfigured.

In the technical solutions of the embodiments of the present disclosure, during the configuration of the scheduling and transmission policy of the access network element, the latency variation distribution characteristic and the latency variation requirements of the service data packet are taken into consideration, which may achieve configuration of the scheduling and transmission policy of the access network element based on the latency variation distribution characteristic may satisfy the latency variation requirements, may avoid QoS degradation, may improve time-frequency resource efficiency, and facilitate improvement of service experience.

Apparatus embodiments of the present disclosure are described below, which may be configured for performing the data transmission methods in the above embodiments of the present disclosure. For details not disclosed in the apparatus embodiments of the present disclosure, reference is made to the data transmission methods in the above embodiments of the present disclosure.

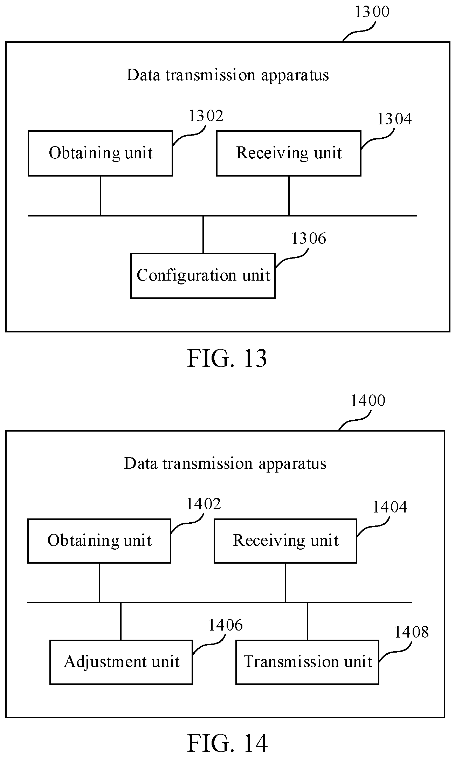

FIG. 13 is a block diagram of a data transmission apparatus according to an embodiment of the present disclosure.

Referring to FIG. 13, a data transmission apparatus 1300 according to an embodiment of the present disclosure includes an obtaining unit 1302, a receiving unit 1304, and a configuration unit 1306.

The obtaining unit 1302 is configured to obtain a latency variation distribution characteristic of a service data packet, the latency variation distribution characteristic being configured for indicating a transmission latency range of the service data packet. The receiving unit 1304 is configured to receive latency variation requirements of the service data packet configured by a core network element. The configuration unit 1306 is configured to configure a scheduling and transmission policy of an access network element based on the latency variation distribution characteristic and the latency variation requirements.

In some embodiments of the present disclosure, based on the above solution, the data transmission apparatus 1300 may further includes a detection unit, configured to detect whether service data transmitted between an AS and the access network element satisfies the latency variation requirements during transmission based on the scheduling and transmission policy of the access network element being configured.

The configuration unit 1306 is further configured to reconfigure the scheduling and transmission policy of the access network element based on the latency variation distribution characteristic and the latency variation requirements if the service data transmitted between the application server and the access network element does not satisfy the latency variation requirements during the transmission, and perform data transmission based on a reconfigured scheduling and transmission policy.

In some embodiments of the present disclosure, based on the above solution, the obtaining unit 1302 is configured to receive the latency variation distribution characteristic transmitted by the core network element, the latency variation distribution characteristic being forwarded by the core network element based on a latency variation distribution characteristic transmitted by an AF entity, or the latency variation distribution characteristic being transmitted by the core network element to the access network element based on adjusting the latency variation distribution characteristic transmitted by the AF entity.

In some embodiments of the present disclosure, based on the above solution, the configuration unit 1306 is configured to: adjust the latency variation distribution characteristic based on the latency variation requirements, to obtain an adjusted latency variation distribution characteristic; and configure the scheduling and transmission policy of the access network element based on the adjusted latency variation distribution characteristic.

In some embodiments of the present disclosure, based on the above solution, the receiving unit 1304 is configured to receive latency variation requirements from an AF entity forwarded by a PCF entity, the latency variation requirements being generated by the AF entity based on service attribute information corresponding to the service data packet.

In some embodiments of the present disclosure, based on the above solution, the latency variation requirements are determined based on at least one of the following factors:
a tolerance of the service data packet for a latency variation, a size of a playback buffer corresponding to the service data packet, a playable duration of the playback buffer corresponding to the service data packet, a service characteristic corresponding to the service data packet, transmitting end capability information of the service data packet, receiving end capability information of the service data packet, and an encoding/decoding algorithm corresponding to the service data packet.

FIG. 14 is a block diagram of a data transmission apparatus according to an embodiment of the present disclosure.

Referring to FIG. 14, a data transmission apparatus 1400 according to an embodiment of the present disclosure includes an obtaining unit 1402, a receiving unit 1404, an adjustment unit 1406, and a transmission unit 1408.

The obtaining unit 1402 is configured to obtain a latency variation distribution characteristic of a service data packet, the latency variation distribution characteristic being configured for indicating a transmission latency range of the service data packet. The receiving unit 1404 is configured to receive latency variation requirements of the service data packet transmitted by an AF entity. The adjustment unit 1406 is configured to adjust the latency variation distribution characteristic based on the latency variation requirements, to obtain an adjusted latency variation distribution characteristic. The transmission unit 1408 is configured to transmit the adjusted latency variation distribution characteristic to an access network element, so that the access network element configures a scheduling and transmission policy based on the adjusted latency variation distribution characteristic.

In some embodiments of the present disclosure, based on the above solution, the adjustment unit 1406 is further configured to readjust the latency variation distribution characteristic of the service data packet based on the latency variation requirements of the service data packet if triggering information configured for instructing to readjust the latency variation distribution characteristic transmitted by the access network element is received.

The transmission unit 1408 is further configured to transmit a readjusted latency variation distribution characteristic to the access network element, so that the access network element reconfigures the scheduling and transmission policy based on the readjusted latency variation distribution characteristic.

In some embodiments of the present disclosure, based on the above solution, the obtaining unit 1402 is further configured to obtain periodicity information of the service data packet. The transmission unit 1408 is further configured to transmit the periodicity information of the service data packet to the access network element, so that the access network element configures the scheduling and transmission policy based on the periodicity information and the adjusted latency variation distribution characteristic.

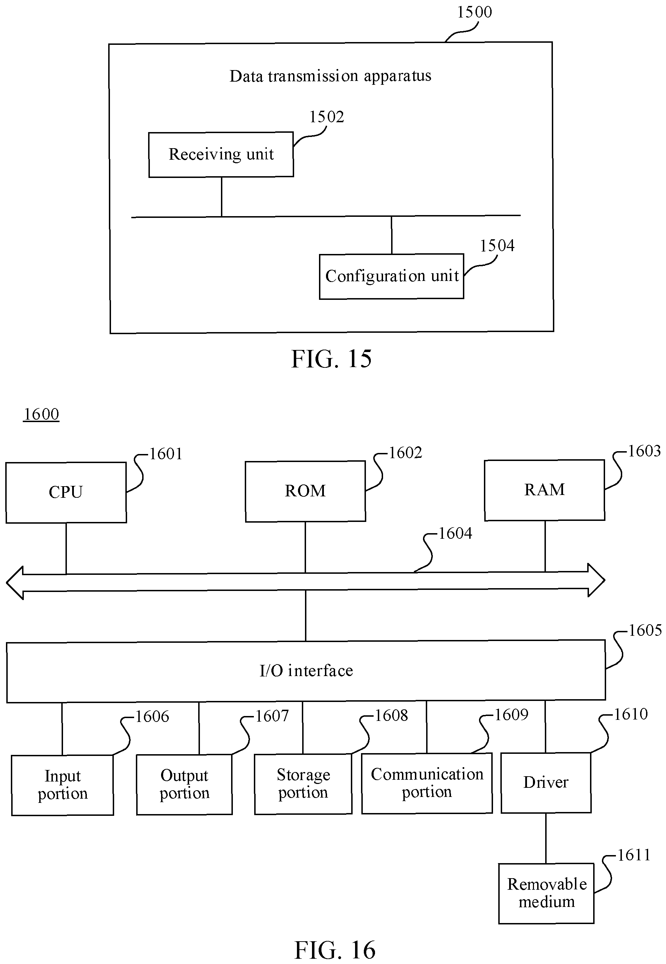

FIG. 15 is a block diagram of a data transmission apparatus according to an embodiment of the present disclosure.

Referring to FIG. 15, a data transmission apparatus 1500 according to an embodiment of the present disclosure includes a receiving unit 1502 and a configuration unit 1504.

The receiving unit 1502 is configured to receive an adjusted latency variation distribution characteristic for a service data packet transmitted by a core network element, the adjusted latency variation distribution characteristic being obtained by the core network element by adjusting a latency variation distribution characteristic of the service data packet based on latency variation requirements of the service data packet, and the latency variation distribution characteristic being configured for indicating a transmission latency range of the service data packet. The configuration unit 1504 is configured to configure a scheduling and transmission policy of an access network element based on the adjusted latency variation distribution characteristic.

In some embodiments of the present disclosure, based on the above solution, the data transmission apparatus 1500 further includes a detection unit, configured to detect whether service data transmitted between an AS and the access network element satisfies the latency variation requirements during transmission after the scheduling and transmission policy of the access network element is configured. a transmission unit, configured to trigger the core network element to readjust the latency variation distribution characteristic of the service data packet based on the latency variation requirements of the service data packet if the service data transmitted between the AS and the access network element does not satisfy the latency variation requirements during the transmission. The receiving unit 1502 is further configured to receive a readjusted latency variation distribution characteristic transmitted by the core network element. The configuration unit 1504 is further configured to reconfigure the scheduling and transmission policy of the access network element based on the readjusted latency variation distribution characteristic.

FIG. 16 is a schematic structural diagram of a computer system of an electronic device configured to implement an embodiment of the present disclosure.

A computer system 1600 of the electronic device shown in FIG. 16 is merely an example, and does not impose any limitation on a function and use scope of this embodiment of the present disclosure.

As shown in FIG. 16, the computer system 1600 includes a central processing unit (CPU) 1601. The CPU may perform various actions and processing, for example, perform the method described in the above embodiments, based on a program stored in a read-only memory (ROM) 1602 or a program loaded from a storage portion 1608 into a random access memory (RAM) 1603. The RAM 1603 further has various programs and data required for system operations stored therein. The CPU 1601, the ROM 1602, and the RAM 1603 are connected to each other through a bus 1604. An input/output (I/O) interface 1605 is also connected to the bus 1604.

The following components are connected to the I/O interface 1605: an input portion 1606 including a keyboard, a mouse, and the like, an output portion 1607 including a cathode ray tube (CRT), a liquid crystal display (LCD), a speaker, and the like, a storage portion 1608 including a hard disk and the like, and a communication portion 1609 including a network interface card such as a local area network (LAN) card and a modem. The communication portion 1609 performs communication processing by using a network such as the Internet. A driver 1610 is also connected to the I/O interface 1605 as required. A removable medium 1611, such as a magnetic disk, an optical disc, a magneto-optical disk, or a semiconductor memory is installed on the driver 1610 as required, so that a computer program read from the removable medium is installed into the storage portion 1608 as required.

In particular, according to some embodiment of the present disclosure, the above processes described with reference to the flowcharts may be implemented as computer software programs. For example, an embodiment of the present disclosure includes a computer program product, including a computer program carried in a computer-readable medium. The computer program includes a computer program configured to perform the methods shown in the flowcharts. In such an embodiment, the computer program may be downloaded and installed from a network through the communication portion 1609 and/or installed from the removable medium 1611. When the computer program is executed by the CPU 1601, the various functions defined in the system of the present disclosure are executed.

The computer-readable medium shown in this embodiment of the present disclosure may be a computer-readable signal medium, a computer-readable storage medium, or any combination thereof. The computer-readable storage medium may be, for example, but is not limited to, an electric, magnetic, optical, electromagnetic, infrared, or semi-conductive system, apparatus, or component, or any combination thereof. More specific examples of the computer-readable storage medium may include but are not limited to an electrical connection having one or more wires, a portable computer magnetic disk, a hard disk, a RAM, a ROM, an erasable programmable read-only memory (EPROM), a flash memory, an optical fiber, a compact disk read-only memory (CD-ROM), an optical storage device, a magnetic storage device, or any proper combination thereof. In the present disclosure, the computer-readable storage medium may be any tangible medium having a program included or stored therein. The program may be used by or used in combination with an instruction execution system, apparatus, or device. In the present disclosure, the computer-readable signal medium may include a data signal transmitted in a baseband or as a part of a carrier, which carries a computer-readable computer program. Such a transmitted data signal may have various forms, including but not limited to an electromagnetic signal, an optical signal, or any proper combination thereof. The computer-readable signal medium may be any computer-readable medium other than a computer-readable storage medium. The computer-readable medium may be configured to transmit or propagate a program used by or used in conjunction with an instruction execution system, apparatus, or device. The computer program included in the computer-readable medium may be transmitted by using a medium, including but not limited to a wireless medium, a wired medium, or any proper combination thereof.

The flowcharts and the block diagrams in the drawings illustrate system architectures, functions, and operations that may be implemented by the system, the method, and the computer program product in some embodiments of the present disclosure. Each block in the flowcharts or the block diagrams may represent a module, a program segment, or a part of code. The module, the program segment, or the part of the code includes one or more executable instructions configured for implementing a specified logical function. In some embodiments, functions noted in the blocks may also occur out of the order noted in the drawings. For example, depending on functions involved, two blocks shown in succession may be executed in parallel, or may be executed in reverse order. Each block of the block diagrams or the flowcharts and combinations of blocks in the block diagrams or the flowcharts may be implemented by a dedicated hardware-based system configured to perform specified functions or operations, or may be implemented by a combination of dedicated hardware and a computer program.

The involved units described in some embodiments of the present disclosure may be implemented by software or hardware, and the described units may be arranged in a processor. Names of the units do not constitute a limitation on the units.

In another aspect, the present disclosure further provides a computer-readable medium. The computer readable medium may be included in the electronic device in some embodiments, or may exist alone without being installed into the electronic device. The computer-readable medium has one or more computer programs carried therein. The one or more computer programs, when executed by the electronic device, may cause the electronic device to implement the methods according to some embodiments.

Although a plurality of modules or units of a device configured to perform actions are discussed in the above detailed description, such division is not mandatory. In fact, based on the implementations of the present disclosure, the features and functions of the two or more modules or units described above may be embodied by one module or unit. On the contrary, the features and functions of one module or unit described above may be further divided to be embodied by a plurality of modules or units.

A person skilled in the art may clearly learn from the above descriptions of the implementations that the exemplary implementations described herein may be implemented by software, or may be implemented by software in combination with hardware. Therefore, the technical solutions of the implementations of the present disclosure may be embodied in a form of a software product. The software product may be stored in a non-volatile storage medium (which may be a CD-ROM, a USB flash drive, a removable hard disk, or the like) or on the network, including a plurality of instructions configured for causing a computing device (which may be a personal computer, a server, a touch terminal, a network device, or the like) to perform the methods according to some embodiments.

A person skilled in the art can easily figure out other implementations of the present disclosure after considering the specification and practicing the implementations disclosed herein. The present disclosure is intended to cover any variations, usages, or adaptive changes of the present disclosure. These variations, usages, or adaptive changes follow the general principles of the present disclosure and include common general knowledge or common technical means in the art not disclosed in the present disclosure.

The present disclosure is not limited to the precise structures described above and shown in the drawings, and various modifications and changes may be made without departing from the scope of the present disclosure. The scope of the present disclosure is limited only by the appended claims.

## Claims

1. A data transmission method, performed by a first access network element, the method comprising:
obtaining a first latency variation distribution characteristic of a service data packet indicating a transmission latency range of the service data packet;
receiving latency variation requirements of the service data packet determined by a core network element; and
configuring a scheduling and transmission policy of a second access network element based on the first latency variation distribution characteristic and the latency variation requirements.

2. The data transmission method according to claim 1, wherein after the configuring a scheduling and transmission policy of the second access network element, the method further comprises:
detecting whether service data transmitted between an application server (AS) and the second access network element satisfies the latency variation requirements during a data transmission;
reconfiguring the scheduling and transmission policy of the second access network element based on the first latency variation distribution characteristic and the latency variation requirements if the service data transmitted between the application server and the second access network element does not satisfy the latency variation requirements during the data transmission; and
performing the data transmission based on the reconfigured scheduling and transmission policy.

3. The data transmission method according to claim 1, wherein the obtaining the first latency variation distribution characteristic of a service data packet comprises:
receiving the first latency variation distribution characteristic transmitted by the core network element,
wherein the first latency variation distribution characteristic is forwarded by the core network element based on a second latency variation distribution characteristic transmitted by an application function (AF) entity, or the first latency variation distribution characteristic is transmitted by the core network element to the first access network element based on adjusting the second latency variation distribution characteristic transmitted by the AF entity.

4. The data transmission method according to claim 1, wherein the configuring the scheduling and transmission policy of the second access network element based on the first latency variation distribution characteristic and the latency variation requirements comprises:
adjusting the first latency variation distribution characteristic based on the latency variation requirements, to obtain an adjusted latency variation distribution characteristic; and
configuring the scheduling and transmission policy of the second access network element based on the adjusted first latency variation distribution characteristic.

5. The data transmission method according to claim 1, wherein the receiving latency variation requirements of the service data packet determined by a core network element comprises:
receiving latency variation requirements from an AF entity forwarded by a policy control function (PCF) entity, and
wherein the latency variation requirements are generated by the AF entity based on service attribute information corresponding to the service data packet.

6. The data transmission method according to claim 5, wherein the latency variation requirements are determined based on at least one of the following service attribute information corresponding to the service data packet:
a tolerance of the service data packet for a latency variation, a size of a playback buffer corresponding to the service data packet, a playable duration of the playback buffer corresponding to the service data packet, a service characteristic corresponding to the service data packet, transmitting end capability information of the service data packet, receiving end capability information of the service data packet, and an encoding/decoding algorithm corresponding to the service data packet.

7. A data transmission method, performed by a core network element, the method comprising:
obtaining a latency variation distribution characteristic of a service data packet indicating a transmission latency range of the service data packet;
receiving latency variation requirements of the service data packet transmitted by an AF entity;
adjusting the latency variation distribution characteristic based on the latency variation requirements, to obtain an adjusted latency variation distribution characteristic; and
transmitting the adjusted latency variation distribution characteristic to an access network element, wherein the access network element configures a scheduling and transmission policy based on the adjusted latency variation distribution characteristic.

8. The data transmission method according to claim 7, further comprising:
readjusting the latency variation distribution characteristic of the service data packet based on the latency variation requirements of the service data packet, in response to receiving triggering information instructing to readjust the latency variation distribution characteristic transmitted by the access network element; and
transmitting a readjusted latency variation distribution characteristic to the access network element, so that the access network element reconfigures the scheduling and transmission policy based on the readjusted latency variation distribution characteristic.

9. The data transmission method according to claim 7 or 8, further comprising:
obtaining periodicity information of the service data packet; and
transmitting the periodicity information of the service data packet to the access network element, so that the access network element configures the scheduling and transmission policy based on the periodicity information and the adjusted latency variation distribution characteristic.

10. A data transmission method, performed by a first access network element, the method comprising:
receiving an adjusted latency variation distribution characteristic for a service data packet transmitted by a core network element, the adjusted latency variation distribution characteristic being obtained by the core network element by adjusting a latency variation distribution characteristic of the service data packet based on latency variation requirements of the service data packet, and the latency variation distribution characteristic being configured for indicating a transmission latency range of the service data packet; and
configuring a scheduling and transmission policy of a second access network element based on the adjusted latency variation distribution characteristic.

11. The data transmission method according to claim 10, wherein after the configuring the scheduling and transmission policy of the second access network element, the method further comprises:
detecting whether service data transmitted between an AS and the second access network element satisfies the latency variation requirements during a data transmission;
triggering the core network element to readjust the latency variation distribution characteristic of the service data packet based on the latency variation requirements of the service data packet if the service data transmitted between the AS and the second access network element does not satisfy the latency variation requirements during the data transmission;
receiving a readjusted latency variation distribution characteristic transmitted by the core network element; and
reconfiguring the scheduling and transmission policy of the second access network element based on the readjusted latency variation distribution characteristic.

12. A data transmission apparatus, comprising:
an obtaining unit, configured to obtain a first latency variation distribution characteristic of a service data packet indicating a transmission latency range of the service data packet;
a receiving unit, configured to receive latency variation requirements of the service data packet determined by a core network element; and
a configuration unit, configured to configure a scheduling and transmission policy of a second access network element based on the first latency variation distribution characteristic and the latency variation requirements.

13. A data transmission apparatus, comprising:
an obtaining unit, configured to obtain a latency variation distribution characteristic of a service data packet indicating a transmission latency range of the service data packet;
a receiving unit, configured to receive latency variation requirements of the service data packet transmitted by an AF entity;
an adjustment unit, configured to adjust the latency variation distribution characteristic based on the latency variation requirements, to obtain an adjusted latency variation distribution characteristic; and
a transmission unit, configured to transmit the adjusted latency variation distribution characteristic to an access network element, wherein the access network element configures a scheduling and transmission policy based on the adjusted latency variation distribution characteristic.

14. A data transmission apparatus, comprising:
a receiving unit, configured to receive an adjusted latency variation distribution characteristic for a service data packet transmitted by a core network element, the adjusted latency variation distribution characteristic being obtained by the core network element by adjusting a latency variation distribution characteristic of the service data packet based on latency variation requirements of the service data packet, and the latency variation distribution characteristic being configured for indicating a transmission latency range of the service data packet; and
a configuration unit, configured to configure a scheduling and transmission policy of a second access network element based on the adjusted latency variation distribution characteristic.

15. A computer-readable medium, having a computer program stored therein, the computer program, when executed by a processor, implementing the data transmission method according to any one of claims 1 to 11.

16. An electronic device, comprising:
one or more processors; and
a memory, configured to store one or more computer programs, the one or more computer programs, when executed by the one or more processors, causing the electronic device to implement the data transmission method according to any one of claims 1 to 11.

17. A computer program product, comprising a computer program, the computer program being stored in a computer-readable storage medium, and a processor of an electronic device reading the computer program from the computer-readable storage medium and executing the computer program to cause the electronic device to implement the data transmission method according to any one of claims 1 to 11.
